# EUROPEAN PATENT APPLICATION

(11) **EP 2 515 022 A2**
(43) Date of publication of application: **24.10.2012**
(21) Application number: 12164502.2
(22) Date of filing: 17.04.2012
(51) Int. Cl.: F16L 47/03, F16L 47/30, B29C 65/34

(54) **Improved electrofusion saddle assembly**

(30) Priority: 21.04.2011 GB 201106809
(71) Applicant: Radius Systems Limited, Alfreton, Derbyshire DE55 2JJ (GB)
(72) Inventor: Street, Ronald Arthur, Belper, Derby DE56 4BT (GB)
(74) Representative: Stainthorpe, Vanessa Juliet

(57) **Abstract**

An electrofusion saddle assembly (20) for a plastics pipeline, comprising a saddle (22) provided with an electrofusion element (28), and a hollow body (24) integral with the saddle (22) and provided with an axial bore (26). Each of the saddle (22) and the electrofusion element (28) extends to a position that is in axial alignment with the axial bore (26) such that an upper surface (22a) of the saddle (22) forms a substantially flat surface inside the axial bore (26).

## Description

This invention relates to an electrofusion saddle assembly, and in particular, to an electrofusion saddle assembly for a plastics pipeline.

### BACKGROUND

A branch saddle assembly is a type of an electrofusion saddle assembly and is a fitting that can be mounted to a pipeline, such as a polyethylene pipeline, after it has been commissioned, to make a fluid connection thereto.

Electrofusion saddle assemblies are well known in the art, and an example of an electrofusion saddle assembly is disclosed in the European patent EP-B-1674780 (Radius Systems Limited).

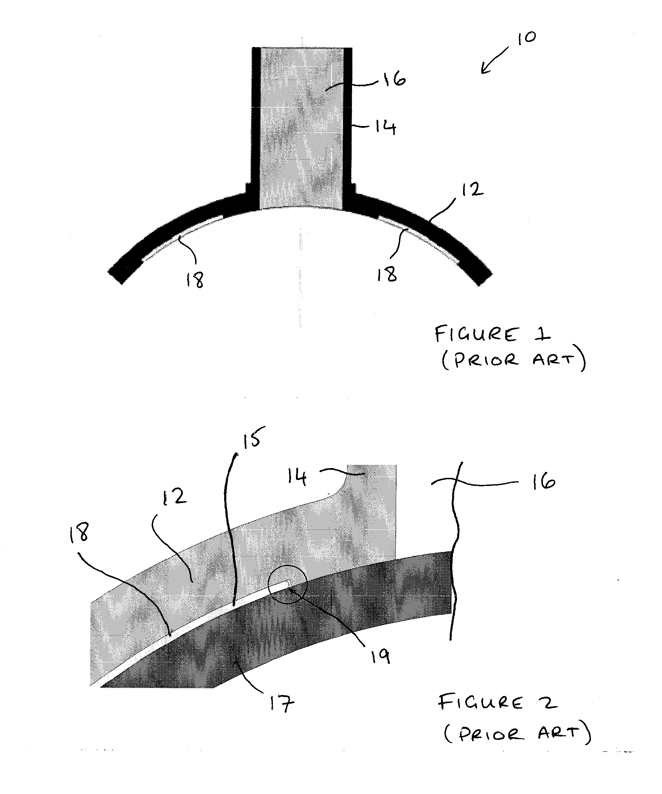

As shown in Figure 1 (PRIOR ART), a typical branch saddle assembly 10 comprises a saddle 12 and a tubular body 14 connected to the saddle 12. The tubular body 14 defines an axial bore 16. The saddle 12 is provided with an electrofusion element 18 which is capable of being energized to melt surrounding fusible polymer material. The electrofusion element 18 may be provided on an electrofusion mat which is attached to the saddle 12, or the electrofusion element 18 may be embedded in the saddle 12 itself.

To form a connection with a plastics pipeline 17, the saddle 12 of the branch saddle assembly 10 is positioned on an outer surface of the pipeline 17 and the electrofusion element 18 is energized so that it melts the surrounding fusible polymer material. Once melted, the fusible polymer material flows away from the electrofusion element into non-heated areas known as "cold zones". The flow of the fusible polymer material into the cold zones generates a back pressure that encourages the gaps between the saddle 12 and the pipeline 17 to be filled by the fusible polymer material, and encourages the intermingling of the polymer chains to improve the strength of the weld once the fusible polymer material subsequently cools. After cooling for a sufficient length of time, the fusible polymer material bonds the pipeline to the saddle 12 of the branch saddle assembly 10.

Once the branch saddle assembly 10 is welded on, a valve is fitted to the body 14 and the newly made joint is pressure tested through the valve. Once the pressure test has been conducted, and confirmed that the joint is satisfactory, a drill is introduced into the body 14 that cuts through the pipeline 17, thus opening a new flow channel and fluidly connecting the pipeline 17 to the branch saddle assembly 14.

The longevity of the branch saddle assembly 10 connection with the pipeline depends on the strength of the weld. Since the weld depends upon a hot melt of fusible material flowing into cold zones and "freezing off', the weld may not be entirely uniform and may therefore possess different strength characteristics at various points. Taking the example shown in Figure 2 (PRIOR ART), a weld 15 is formed by energizing electrofusion element 18 to melt fusible material that has subsequently flowed into cold zones and frozen off. As shown in the circled region of the weld 15, the fusible material has formed a curved or "radius" face at the extreme position at which flow was achieved before being frozen off. This results in the formation of a sharp notch 19 between the weld 15 and the saddle 12, and the weld 15 and the pipeline 17, which extends circumferentially around the weld 15.

When the welded branch saddle assembly 10 is pressurized in use, a thrust force is developed that develops a tensile loading on the saddle 12 that acts to pull the saddle 12 away from the pipeline 17. The notch 19 (or other similar internal defects) provides a surface for the tensile loading of the pressurized fitting to concentrate at which increases the risk of the joint failing and decreases the longevity of the connection.

It is an object of the present invention to provide an electrofusion saddle assembly that overcomes one or more of the problems associated with prior art electrofusion saddle assemblies.

### BRIEF SUMMARY OF THE DISCLOSURE

In accordance with a first aspect of the present invention, there is provided an electrofusion saddle assembly for a plastics pipeline, comprising:
a saddle provided with an electrofusion element; and
a hollow body integral with the saddle and provided with an axial bore;
wherein the saddle extends to a position that is in axial alignment with the axial bore and an upper surface of the part of the saddle in axial alignment with the axial bore is a substantially flat surface oriented substantially perpendicular to a longitudinal axis of the axial bore.

Thus, the electrofusion saddle assembly is capable of producing a weld that extends along the saddle to a position that is in axial alignment with the axial bore. Therefore, when fluid communication between the axial bore and the pipeline is established by cutting through the part of the saddle within the axial bore, and the pipeline, any internal defects or notches formed at the extreme radially inner edge of the weld by the electrofusion process will be removed. This improves the strength and longevity of the connection as such defects might otherwise affect the assembly's long term resistance to the formation of cracks that could lead to failure of the connection.

Also, the remaining weld is formed up to a maximal radially inner extent thereby improving the pull-off resistance of the electrofusion saddle assembly. Furthermore, since the remaining weld is formed up to a maximal radially inner extent, the size of the remainder of the saddle can be reduced thereby reducing manufacturing, storage and transport costs.

The flat surface reduces the amount of stray swarf produced when a cutting tool, such as a hole saw, impacts on its surface, and minimizes the risk of swarf dropping into the pipeline and contaminating the fluid flowing therein. With a flat surface, the swarf produced is easily captured in a cutting tool and removed with the cap of cut material.

In a preferable embodiment, each end of the electrofusion element is connected to an electrical terminal and one of the electrical terminals is disposed within the axial bore. In this embodiment, the electrofusion element can be a single winding of resistive wire starting at radially outer sides of the saddle and spiraling towards a radially inner position where it is connected to the electrical terminal disposed in the axial bore. Therefore, there is no need for the electrofusion element to cross-over itself so that both ends are connected to electrical terminals outside of the axial bore. This simplifies the manufacture of the electrofusion element, despite whether it is formed on a mat or embedded in the saddle.

Preferably, the electrofusion element extends to a position that is in axial alignment with the axial bore.

In any of the above-described aspects of the present invention, the saddle preferably comprises a pilot hole therethrough that is in fluid communication with the axial bore. The pilot hole can allow a pressurized fluid to access a newly formed weld to test the strength of the connection prior to establishing fluid communication between the pipeline and the axial bore. Additionally, the pilot hole can assist in aligning a cutting tool centrally in the axial bore for cutting through the saddle and the pipeline.

In one preferable embodiment, the electrofusion element is provided on an electrofusion mat that is attached to the saddle. In an alternative preferable embodiment, the electrofusion element is embedded in the saddle, by a wire plough technique, for example.

Preferably, the saddle and hollow body are integrally moulded.

Additionally or alternatively, the electrofusion saddle assembly is preferably a branch saddle assembly or a tapping tee assembly.

In accordance with a second aspect of the present invention, there is provided a method of connecting an electrofusion saddle assembly to a plastics pipeline, the method comprising the steps of:
i) providing an electrofusion saddle assembly according to the first aspect of the present invention;
ii) electrofusing the electrofusion saddle assembly to the plastics pipeline;
iii) inserting a cutting tool in the axial bore and cutting and removing:
   at least part of the saddle that extends to a position that is in axial alignment with the axial bore;
   at least part of the electrofused region that is in axial alignment with the axial bore; and
   at least part of the plastics pipeline that is in axial alignment with the axial bore;
   such that the plastics pipeline is in fluid communication with the axial bore.

Preferably, the saddle comprises a pilot hole therethrough that is in fluid communication with the axial bore, and the method further comprises the step of performing a pressure test on the electrofusion saddle assembly by applying a fluid pressure through the pilot hole, after performing step ii) and prior to performing step iii).

Further preferably, or alternatively, each end of the electrofusion element is connected to an electrical terminal and one of the electrical terminals is disposed within the axial bore; and the method further comprises the step of removing the electrical terminal disposed in the bore with the cutting tool.

### BRIEF DESCRIPTION OF THE DRAWINGS

Embodiments of the invention are further described hereinafter with reference to the accompanying drawings, in which:
Figure 1 (PRIOR ART) is a cross-sectional view of a typical prior art branch saddle assembly;
Figure 2 (PRIOR ART) is a partial cross-sectional view of the prior art branch saddle assembly of Figure 1, shown welded to a pipeline; and
Figure 3 is a cross-sectional view of a branch saddle assembly according to an embodiment of the present invention.

### DETAILED DESCRIPTION

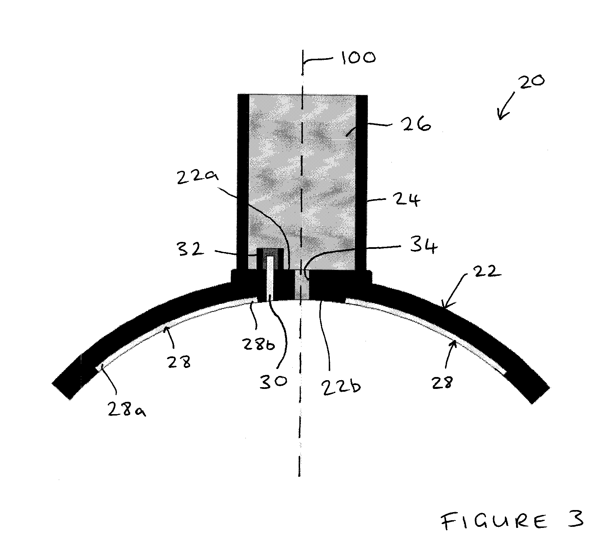

A branch saddle assembly 20 according to an embodiment of the present invention is shown in cross-section in Figure 3. The branch saddle assembly 20 includes an integrally moulded saddle 22 and a hollow tubular body 24. The tubular body 24 defines an axial bore 26 that is parallel to and centered on a longitudinal axis 100 of the assembly 20.

The saddle 22 extends to a position that is in axial alignment (i.e. aligned in a direction parallel to longitudinal axis 100) with the axial bore 26 of the body 24 such that an upper surface 22a of the saddle 22 forms a substantially flat surface inside the axial bore 26, where the plane of the flat surface 22a is oriented substantially perpendicular to the longitudinal axis 100. The flat surface 22a extends entirely across the axial bore 26 but for a central aperture 34 centered about the longitudinal axis 100. The central aperture 34 is a pilot hole that passes through the saddle 22 from the upper surface to a lower surface 22b and is in fluid communication with the axial bore 26.

The saddle 22 comprises an electrofusion element 28 that is provided on a mat that is attached to the lower surface 22b of the saddle 22. The electrofusion element 28 is a length of resistive wire that is spirally wound on the mat about the longitudinal axis 100 of the assembly 20, from a radially outer end 28a to a radially inner end 28b.

The radially inner end 28b of the electrofusion element 28 forms an electrical connection with a first terminal pin 30 that is mounted in the saddle 22 and is upstanding in the axial bore 26. The upstanding part of the terminal pin 30 is surrounded by a terminal shroud 32 that is shaped to receive and hold a suitable energizing tool in electrical connection with the first terminal pin 30 for energizing the electrofusion element 28. The radially outer end 28a of the electrofusion element forms an electrical connection with a second terminal pin (not shown) that is mounted in the saddle 22 at a position close to the radially outer end 28a of the electrofusion element, outside of the axial bore 26. With this arrangement of terminal pins, the electrofusion element 28 can form a simple winding on the electrofusion mat from the radially outer end 28a to the radially inner end 28b avoiding any complicated cross-overs of the resistive wire.

To attach the branch saddle assembly 20 to a plastics pipeline, the saddle 22 of the assembly 20 is placed against the outer surface of the pipeline and the electrofusion element 28 is energized by connecting an electrical power supply to the first terminal pin 30 and the second terminal pin (not shown). The energized electrofusion element 28 heats up and causes surrounding fusible polymer material to melt. The melted material flows away from the electrofusion element 28 towards non-heated "cold zones" where it "freezes off" and becomes solid once more. In the embodiment shown in Figure 3, a cold zone is formed by the part of the saddle 22 that extends to be axially aligned with the axial bore 26. Therefore, the flowing melted material freezes off at a position that is in axial alignment with the axial bore.

Once all of the fusible material has been allowed to cool, the branch saddle assembly 20 will be welded to the pipeline. Pressure tests may then be performed on the connection to ensure that the weld is properly formed and can withstand at least the operating pressures it will experience in use. To perform the pressure test, a pressurized fluid, such as water or air, is introduced into the axial bore 26. The pilot hole 34 provides fluid communication between the weld and the axial bore 26 into which the pressurized fluid is introduced. Therefore, the pressurized fluid can come into contact with the weld and the quality of the connection can be tested.

Once the connection has been pressure tested and the engineer is satisfied that the weld is sufficiently strong, fluid communication between the pipeline and the axial bore 26 can be established. To do this, a cutting tool (not shown), such as a hole saw, is inserted into the axial bore and drilled down to cut the upper surface 22a of the saddle 22. The pilot hole 34 can be used as a guide to assist in getting the hole saw central in the axial bore 26. Since the upper surface 22a of the saddle is substantially flat inside the axial bore 26, the cutting tool meets a flat surface and immediately generates continuous shavings under the teeth of the tool which are easily captured within the cutting tool. Therefore, the flat surface of the upper surface 22a of the saddle 22 minimizes the risk of swarf dropping into the pipeline and contaminating the fluid (e.g. water or gas) flowing therein.

The cutting tool continues to cut through the saddle 22 within the axial bore 26 to separate the first terminal pin 30 and shroud 32 from the remainder of the saddle 22. Further operation of the cutting tool cuts through the electrofusion element and the newly formed weld, and then through the pipeline. The cutting tool is then withdrawn from the axial bore 26 taking with it a "cap" (i.e. the cut portion) of the saddle 22 (incorporating a portion of the weld and the electrofusion element 28), the first terminal pin 30 and the shroud 32, and a cap of the pipeline. Thus, the removal of the cap of the saddle 22 removes any notches or other irregular defects formed at the extreme radially inner edge of the weld.

Once the cutting tool is removed from the axial bore 26, fluid communication is established between the axial bore 26 and the pipeline. The only portion of the weld exposed to fluid of the pipeline is the newly cut edge and, so, there is no variation in pressure along the exposed portion of the weld. The weld is therefore more uniform and is formed right up to the cut hole in the pipeline (i.e. in axial alignment with the body 24) preventing fluid entering between the saddle 22 and the pipeline. Consequently, the branch saddle assembly 20 according to the present invention is more reliable than prior art arrangements, and the longevity of the connection is significantly improved. Since the weld is formed up to a point that is in axial alignment with the body 24, the pull-off resistance of the branch saddle assembly 20 is improved. Additionally, in variations of the present invention, the size of the saddle 22 may be reduced since the weld is formed to a maximal radially inner extent.

In the embodiment described above with reference to Figure 3, the saddle 22 is a rigid section of a cylinder so that it is arranged to conform to the outer surface of a pipeline of a particular diameter. In alternative embodiments the shape and form of the saddle may be different so as to be able to conform to the outer surfaces of pipelines that are different shapes and sizes. In one particular alternative embodiment, the saddle may be flexible so as to be capable of conforming to a variety of pipe diameters.

The electrofusion element 28 may be provided on a mat that is attached to the lower surface 22b of the saddle 22. In alternative embodiments, the electrofusion element 28 may be embedded in the lower surface 22b of the saddle 22 using a wire plough technique, whereby a continuous spiral of resistive wire is laid from the radially outer ends of the saddle 22 towards a radially inner area. The radially inner end of the electrofusion element 28 may be connected to a terminal pin mounted within the axial bore 26, as shown in Figure 3. In alternative embodiments, both terminal pins may be outside of the axial bore 26.

Whilst preferable, alternative embodiments of the invention may not necessarily have a substantially flat upper surfaced portion 22a of the saddle 22 within the axial bore 26.

Although the present invention is described in the context of branch saddle assemblies, the features of the present invention are equally applicable to any electrofusion saddle assembly, including branch saddle assemblies and tapping tee assemblies. Indeed, the present invention is not limited to branch assemblies.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. An electrofusion saddle assembly for a plastics pipeline, comprising:
a saddle provided with an electrofusion element; and
a hollow body integral with the saddle and provided with an axial bore;
wherein the saddle extends to a position that is in axial alignment with the axial bore and an upper surface of the part of the saddle in axial alignment with the axial bore is a substantially flat surface oriented substantially perpendicular to a longitudinal axis of the axial bore.

2. An electrofusion saddle assembly according to claim 1, wherein the electrofusion element extends to a position that is in axial alignment with the axial bore.

3. An electrofusion saddle assembly according to claim 1 or 2, wherein each end of the electrofusion element is connected to an electrical terminal and one of the electrical terminals is disposed within the axial bore.

4. An electrofusion saddle assembly according to any preceding claim, wherein the saddle comprises a pilot hole therethrough that is in fluid communication with the axial bore.

5. An electrofusion saddle assembly according to any preceding claim, wherein the electrofusion element is provided on an electrofusion mat that is attached to the saddle.

6. An electrofusion saddle assembly according to any of claims 1 to 5, wherein the electrofusion element is embedded in the saddle.

7. An electrofusion saddle assembly according to any preceding claim, wherein the saddle and hollow body are integrally moulded.

8. An electrofusion saddle assembly according to any preceding claim, wherein the electrofusion saddle assembly is a branch saddle assembly.

9. An electrofusion saddle assembly according to any of claims 1 to 7, wherein the electrofusion saddle assembly is a tapping tee assembly.

10. An electrofusion saddle assembly for a plastics pipeline substantially as hereinbefore described with reference to the accompanying drawings.

11. A method of connecting an electrofusion saddle assembly to a plastics pipeline, the method comprising the steps of:
i) providing an electrofusion saddle assembly according to claim 1;
ii) electrofusing the electrofusion saddle assembly to the plastics pipeline;
iii) inserting a cutting tool in the axial bore and cutting and removing:
at least part of the saddle that extends to a position that is in axial alignment with the axial bore;
at least part of the electrofused region that is in axial alignment with the axial bore; and
at least part of the plastics pipeline that is in axial alignment with the axial bore;
such that the plastics pipeline is in fluid communication with the axial bore.

12. A method according to claim 11, wherein the saddle comprises a pilot hole therethrough that is in fluid communication with the axial bore, and the method further comprises the step of performing a pressure test on the electrofusion saddle assembly by applying a fluid pressure through the pilot hole, after performing step ii) and prior to performing step iii).

13. A method according to claim 11 or 12, wherein each end of the electrofusion element is connected to an electrical terminal and one of the electrical terminals is disposed within the axial bore; and the method further comprises the step of removing the electrical terminal disposed in the bore with the cutting tool.

14. A method of connecting an electrofusion saddle assembly to a plastics pipeline substantially as hereinbefore described with reference to the accompanying drawings.
